# EUROPÄISCHE PATENTSCHRIFT

(11) **EP 2 812 534 B1**
(45) Veröffentlichungstag und Bekanntmachung des Hinweises auf die Patenterteilung: **22.11.2017**
(21) Anmeldenummer: 13702783.5
(22) Anmeldetag: 29.01.2013
(51) Int. Cl.: E21D 20/00, B23B 31/14, B23B 31/171

(54) **SETZWERKZEUG UND VERFAHREN ZUR MONTAGE EINER ANKERSTANGE**
SETTING TOOL AND METHOD FOR INSTALLING AN ANCHOR ROD
OUTIL DE POSE ET PROCÉDÉ DE MONTAGE D'UNE TIGE D'ANCRAGE

(30) Priorität: 06.02.2012 DE 102012201662
(43) Veröffentlichungstag der Anmeldung: 17.12.2014
(73) Patentinhaber: HILTI Aktiengesellschaft, 9494 Schaan (LI)
(72) Erfinder: GINTER, Herbert, 87656 Germaringen (DE)
(74) Vertreter: Hilti Aktiengesellschaft Corporate Intellectual Property
(86) Internationale Anmeldenummer: PCT/EP2013/051623
(87) Internationale Veröffentlichungsnummer: WO 2013/117456

(56) Entgegenhaltungen:
- CH-A5- 632 313
- DE-C1- 10 148 683
- FR-A1- 2 334 872
- JP-A- H09 195 666
- JP-U- S6 087 661
- US-A- 4 289 427

## Beschreibung

Die Erfindung betrifft ein Setzwerkzeug zum Einsetzen einer Ankerstange in ein Bohrloch mit einem Gehäuse, das eine Aufnahme für die Ankerstange aufweist, in das die Ankerstange in Längsrichtung eingeschoben und in dieser fixiert werden kann. Die Erfindung betrifft des Weiteren ein Verfahren zur Montage einer Ankerstange mit einem solchen Setzwerkzeug.

Setzwerkzeuge werden verwendet, um Ankerstangen in ein Bohrloch einzusetzen, in welchem diese mittels z.B. einer aushärtbaren Masse, wie einer chemischen Mörtelpatrone, verankert werden. Diese Ankerstangen weisen üblicherweise keine Angriffspunkte für ein Werkzeug, wie zum Beispiel einen Sechskant, auf. Das Setzwerkzeug muss also direkt an der Ankerstange angreifen.

Aus dem Stand der Technik sind beispielsweise Setzwerkzeuge bekannt, die auf das Gewinde einer solchen Ankerstange aufgedreht werden. Mit diesen Setzwerkzeugen kann die Ankerstange aber nur jeweils in eine Richtung drehend eingesetzt werden, da sich bei einer Drehung in die entgegengesetzte Richtung das Setzwerkzeug von der Ankerstange bzw. vom Gewinde der Ankerstange herunterdrehen würde.

Eine Lösung dieses Problems ist durch ein Setzwerkzeug möglich, das sich am Gewinde verspannt, beispielsweise mittels zweier Muttern, die gegeneinander verspannt werden. Bei diesem Setzwerkzeug ergibt sich aber das Problem, dass die Muttern in einem separaten Arbeitsschritt aufgeschraubt und verspannt werden müssen und dass ein Lösen dieser Verspannung erst nach dem Anhärten der aushärtbaren Masse möglich ist, da die Ankerstange für das Lösen des Werkzeugs fixiert sein muss. Das Arbeiten mit einem solchen Setzwerkzeug ist also sehr zeitaufwändig, da erst nach dem Anhärten der aushärtbaren Masse weitergearbeitet werden kann.

Zudem sind Setzwerkzeuge, die die Ankerstange am Gewinde halten, prinzipiell nur für eine Gewindegröße ausgelegt, sodass für verschiedene Durchmesser der Ankerstangen jeweils ein eigenes Werkzeug benötigt wird.

Ferner sind Setzwerkzeuge bekannt, die eine spezielle Geometrie (auch Mitnahmegeometrie genannt) an der Ankerstange erfordern, z.B. einen Sechskant-Anschluss. Diese Ankerstangen sind erheblich teurer und schränken die Flexibilität des gesamten Ankersystems hinsichtlich der Flexibilitäten der Verankerungstiefe und der Dicke des zu befestigenden Bauteils deutlich ein.

Die Dokumente JP S60 87661 U und FR 2 334 872 A1 offenbaren andere Setzwerkzeuge. Aufgabe der Erfindung ist es, ein flexibles Setzwerkzeug bereitzustellen, mit dem verschiedene Ankerstangen bzw. auch Ankerstangen ohne ein Gewinde eingesetzt werden können. Dabei sind an der Ankerstange keine speziellen Mitnehmer oder Mitnahmegeometrien erforderlich. Auch sind keine zusätzlichen Aufwendungen hinsichtlich einer temporären Montage von Hilfswerkzeugen z.B. Muttern oder ähnliches erforderlich

Die Aufgabe wird dadurch gelöst, dass bei einem Setzwerkzeug der eingangs genannten Art zumindest ein Klemmelement vorgesehen ist, das der Aufnahme zugeordnet ist, das in einem Anstellwinkel zur Längsachse der Aufnahme geneigt ist und das in einer Führung in der Aufnahme derart gelagert ist, dass das Klemmelement durch Verdrehen des Gehäuses relativ zur Ankerstange aus einer Aufnahmestellung, in der die Ankerstange in Längsrichtung in die Aufnahme eingeschoben werden kann, in eine Klemmstellung, in der die Ankerstange in Umfangsrichtung in der Aufnahme fixiert ist, bewegt werden kann und dadurch die Ankerstange der Bewegung des Setzwerkzeuges folgt.

Der Erfindung liegt der Gedanke zugrunde, die Ankerstange an ihrem Außenumfang in Umfangsrichtung reibschlüssig und in Einschubrichtung formschlüssig zu klemmen.

Dadurch ist unabhängig von einem Gewinde bzw. einem auf das Gewinde aufgeschraubten Werkzeug eine Fixierung der Ankerstange möglich. Nach dem Einführen der Ankerstange wird das zumindest eine Klemmelement von der Aufnahmestellung radial nach innen verfahren, bis es an der Ankerstange anliegt. Aufgrund der Schrägstellung des zumindest einen Klemmelementes im Gehäuse des Setzwerkzeuges, die durch den Anstellwinkel erreicht wird, gleitet bzw. rollt dieses am Außenumfang der Ankerstange ab und zieht die Ankerstange in das Setzwerkzeug, sodass sie sich mit diesem verklemmt. Abhängig vom radialen Abstand der Ausgangsstellung und Klemmstellung ist somit eine Anpassung an verschiedene Durchmesser der Ankerstange möglich.

Die Fixierung der Ankerstange am Werkzeug bzw. in der Aufnahme erfolgt werkzeuglos, indem das gesamte Setzwerkzeug relativ zur Ankerstange verdreht wird. Das zumindest eine Klemmelement kann nach dem Einschieben der Ankerstange in die Aufnahme bereits locker an der Ankerstange anliegen, sodass dieses beim Drehen der Aufnahme aufgrund der Reibung zwischen Klemmelement und Ankerstange in der Aufnahme derart verschoben wird, dass es in die Klemmstellung verfahren wird. Das Klemmelement kann aber auch aufgrund von Trägheitskräften von der Ausgangsstellung in die Klemmstellung bewegt werden.

Vorzugsweise liegt das Klemmelement mit einer möglichst großen Klemmfläche an der Ankerstange an, um zu verhindern, dass beispielsweise ein Gewinde, das auf der Ankerstange vorgesehen ist, durch das Klemmen beschädigt wird. Dementsprechend wird der Anstellwinkel so gewählt, dass eine möglichst große Klemmfläche und sichere Verklemmung erhalten wird.

Das Gehäuse ist erfindungsgemäß im Wesentlichen zylinderförmig ausgebildet, mit einer Bodenplatte, die eine Öffnung zum Einschieben der Ankerstange aufweist, und einer der Bodenplatte gegenüberliegenden Deckelplatte, die über ein oder mehrere Verbindungsmittel miteinander verbunden sind. Die Verbindungsmittel sind dabei nicht beschränkt. Die Platten können beispielweise über eine ganz oder teilweise geschlossene Mantelfläche oder über andere Verbindungsmittel, wie etwa Schrauben, Stangen, Streben und dergleichen miteinander verbunden sein. Alternativ kann die Deck- oder Bodenplatte auch napfförmig ausgebildet sein, sodass spezielle Verbindungsmittel weitgehend entfallen können. Die Ankerstange kann in Richtung der Zylinderlängsachse durch die Öffnung der Bodenplatte eingeschoben werden, bis die Ankerstange an der Deckelplatte anliegt. Durch die Deckelplatte kann auch eine Fixierung in Längsrichtung der Ankerstange erfolgen. Die Ankerstange muss aber bei Montagebeginn, d.h. beim Ansetzen der Ankerstange, nicht an der Deckelplatte anliegen.

Die Führung für das zumindest eine Klemmelement ist erfindungsgemäß durch eine Nut in der Boden- und der Deckelplatte des Gehäuses gebildet. Dies ermöglicht eine einfache Lagerung des Klemmelements ohne zusätzliche Bauteile.

Die Nut definiert erfindungsgemäß abhängig von der gewünschten Klemmwirkung eine geradlinige oder bogenförmige Bahn, auf der das Klemmelement von der Aufnahmestellung in die Klemmstellung an die Ankerstange geführt wird. Durch die Form der Nut kann beeinflusst werden, wie schnell das Klemmelement an die Ankerstange geführt wird bzw. wie hoch die Klemmkraft ist. Vorzugsweise ist diese Bahn spiralförmig zum Mittelpunkt der Aufnahme zulaufend ausgelegt, wobei durch eine flache Neigung der Spirale ein sehr langsames Heranführen des Klemmelements an die Ankerstange bewirkt, aber dadurch eine höhere Klemmkraft auf die Ankerstange ausgeübt werden kann. Andererseits ist durch eine entsprechend steilere Neigung ein schnelles Heranführen der Klemmelemente, also ein Klemmen bei einer sehr geringen Verdrehung des Gehäuses relativ zur Ankerstange möglich. Um hohe Klemmkräfte aufzubringen, ist aber eine entsprechend höhere Drehkraft erforderlich.

Damit das zumindest eine Klemmelement bzw. die Klemmelemente unter einem Anstellwinkel zur Achse des Setzwerkzeugs bzw. der Ankerstange angeordnet werden, sind erfindungsgemäß die Nuten in der Deckelplatte und der Bodenplatte in Umfangsrichtung versetzt angeordnet. Dies bewirkt, dass das Setzwerkzeug beim Drehen des Gehäuses relativ zur Ankerstange hingezogen wird, sodass der Kopf der Ankerstange gegen die Deckelplatte gedrückt wird und sich an dieser abstützt. Der Versatz der Nuten, also der Anstellwinkel des Klemmelements, ist abhängig von der gewünschten Drehrichtung festzulegen, da ein solches Werkzeug nur in einer Drehrichtung verwendet werden kann. Hierdurch kann festgelegt werden, ob die Ankerstange im Rechts- oder im Linkslauf der Setzmaschine (Borhammer, Schrauber) gesetzt werden kann. Dies hat den Vorteil, dass in Abhängigkeit von der (Außen)Struktur des Teils der Ankerstange, der in das Bohrloch eingesetzt wird, wobei die Struktur gegebenenfalls die Funktion einer archimedischen Schraube aufweisen kann, die Drehrichtung des Setzwerkzeugs so gewählt werden kann, dass die in dem Bohrloch befindliche aushärtbare Masse während oder nach dem Setzvorgang nicht aus dem Bohrloch gefördert wird.

Das Klemmelement weist beispielsweise einen Bolzen oder eine Schraube auf, die sich im Wesentlichen in Längsrichtung durch das Gehäuse erstreckt und insbesondere in der Boden- und der Deckelplatte gelagert ist.

An dem Bolzen oder der Schraube ist beispielsweise eine Klemmbacke gelagert, mit der das Klemmelement an der Ankerstange angreifen kann. Diese Klemmbacke bietet eine ausreichend große Anlagefläche, um auf die Ankerstange eine großflächig verteilte Andruck- oder Abrollfläche auszubilden. Vorzugsweise beträgt die Länge des Setzwerkzeugs, das die Ankerstange umfasst, maximal 80 % der Länge des Teils der Ankerstange, der nach dem Setzen aus dem Untergrund ragt. Dadurch ist gewährleistet, dass das Gehäuse des Setzwerkzeuges beim Eindrehen der Ankerstange nicht auf dem Untergrund aufliegt. Andernfalls könnte das Werkzeug oder der Untergrund beschädigt werden. Zudem kann so der planmäßige Materialüberschuss der aushärtbaren Massen, die von der Ankerstange verdrängt wird, aus dem Bohrloch, in das die Ankerstange eingesetzt wird, austreten, ohne dass das Werkzeug verschmutzt.

Die Klemmbacke ist vorzugsweise eine Walze, die drehbar um den Bolzen oder die Schraube gelagert ist und die insbesondere aus einem weicheren und verschleißfesten Material, z.B. einem Kunststoff oder gummiartigen Material besteht. Durch das Drehen der Klemmbacke beim Verschieben des Klemmelements von der Aufnahmestellung in die Klemmstellung ist sichergestellt, dass sowohl an der Ankerstange wie auch am Klemmelement keine übermäßige Abnutzung durch Reibung entsteht, da die Walze gewissermaßen auf der Ankerstange abrollt. Da die Walze aus weicheren Material hergestellt ist, kann sich diese besser an die Ankerstange anpassen. Zudem ist das Material weicher als die Ankerstange, die üblicherweise aus Metall, beispielsweise aus Stahl, hergestellt ist. Dadurch ist eine Beschädigung der Ankerstange zuverlässig verhindert.

Der Bolzen oder die Schraube sind beispielsweise mit Führungselementen in der Führung, insbesondere in der Nut, gelagert, wobei die Führungselemente einen Neigungswinkel einstellen, in dem das Klemmelement zur Längsachse der Aufnahme geneigt ist. Die Neigung wird durch die in Umfangsrichtung versetzt angeordneten Führungen eingestellt. Die Führungselemente weisen Auflageflächen auf, die senkrecht zur Längsachse der Klemmelemente angeordnet sind, so dass trotz des Anstellwinkels eine ebene Auflagefläche für die Klemmelemente vorhanden ist. Durch die Führungselemente ist zudem ein einfaches Gleiten des Bolzens oder der Schraube in der Nut bzw. der Führung sichergestellt.

Um eine Vorfixierung der Ankerstange in der Aufnahme zu erzielen, damit die Ankerstange vor dem Verschieben der Klemmelemente in die Klemmstellung nicht aus dieser herausfallen kann, ist die Öffnung der Bodenplatte vorzugsweise für eine Vorfixierung der Ankerstange elastisch ausgebildet. Dadurch wird zum einen die Ankerstange mittig in der Aufnahme zentriert. Zum anderen kann die Ankerstange nicht aus der Aufnahme herausrutschen. Die flexible Öffnung verhindert zudem das Eindringen von Schmutz in die Aufnahme, so dass eine zuverlässige Funktion der Klemmelemente sichergestellt ist. Vorzugsweise ist die Öffnung als eine Gummiplatte ausgebildet.

Um eine möglichst gleichmäßig verteilte Klemmkraft zu erzielen, sind vorzugsweise drei Klemmelemente vorgesehen, die in Umfangsrichtung gleichmäßig um die Ankerstange verteilt angeordnet sind.

Das Werkzeug weist vorzugsweise eine Befestigung für eine Setzmaschine, beispielsweise eine Bohrmaschine auf, um das Setzwerkzeug und damit die Ankerstange drehen bzw. in Richtung eines Bohrlochs bewegen zu können.

Erfindungsgemäß ist des Weiteren ein Verfahren zur Montage einer Ankerstange mit einem erfindungsgemäßen Setzwerkzeug vorgesehen, bei dem zunächst die Ankerstange in Längsrichtung in die Aufnahme des Setzwerkzeugs eingeschoben wird. Anschließend wird die Ankerstange mit Hilfe des Setzwerkzeuges in ein Bohrloch eingeführt und der Setzvorgang gestartet. Dabei wird das Setzwerkzeug relativ zur Ankerstange in Drehrichtung verdreht, wobei das zumindest eine Klemmelement gegen die Ankerstange geführt wird, an dieser abrollt und sich dadurch das Setzwerkzeug mit der Ankerstange verklemmt. In diesem verklemmten Zustand wird nun die Ankerstange in das mit dem chemischen Mörtel befüllte Bohrloch eingedreht, bis die gewünschte Position erreicht ist. Abschließend wird das Setzwerkzeug durch Verdrehen des Setzwerkzeugs entgegen der Drehrichtung beim Setzten der Ankerstange einfach wieder gelöst.

Weitere Vorteile und Merkmale ergeben sich aus der nachfolgenden Beschreibung in Verbindung mit den beigefügten Zeichnungen. In diesen zeigen:
- Fig. 1: eine Schnittansicht durch ein erfindungsgemäßes Setzwerkzeug, und
- Fig. 2: eine Draufsicht auf die Deckelplatte des Setzwerkzeugs aus Figur 1.

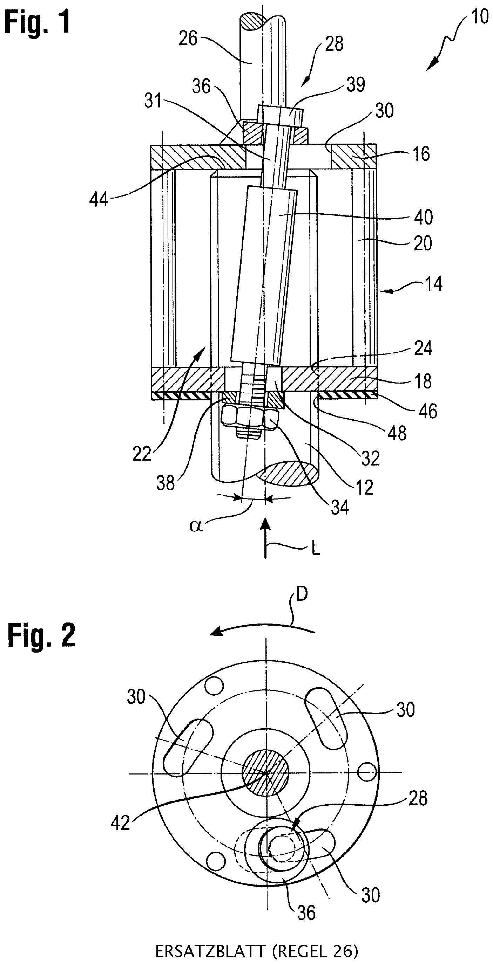

In Figur 1 ist ein Setzwerkzeug 10 zum Einsetzen einer Ankerstange 12 dargestellt. Die Ankerstange 12 wird in ein hier nicht dargestelltes Bohrloch in einem Untergrund eingesetzt und in diesem beispielsweise mittels einer aushärtbaren Masse fixiert. Eine solche aushärtbare Masse besteht aus mindestens zwei chemischen Komponenten, die in das Bohrloch gemischt oder ungemischt eingefüllt werden und in diesem miteinander reagieren und aushärten, wobei eine stoffschlüssige und/oder formschlüssige Verbindung zwischen dem Untergrund, der ausgehärteten Masse und der Ankerstange hergestellt wird. Durch das Eindrehen der Ankerstange in das mit der aushärtbaren Masse befüllte Bohrloch werden die chemischen Komponenten miteinander vermischt und zur Aushärtung gebracht. Die Ankerstange 12 kann beispielsweise ein Gewinde aufweisen. Es ist aber auch denkbar, dass an der Ankerstange 12 andere Mittel zur Lastübertragung, beispielsweise Rippen oder Vorsprünge vorgesehen sind oder dass die Ankerstange 12 außenseitig glatt ausgebildet ist.

Das Setzwerkzeug 10 weist ein Gehäuse 14 auf, mit einer Deckelplatte 16, einer Bodenplatte 18 sowie Verbindungselemente 20. Die Deckelplatte 16 und die Verbindungselemente 20 können auch eine napf- oder dosenförmige Einheit zusammen darstellen Das Gehäuse 14 ist also im Wesentlichen zylinderförmig ausgebildet und definiert in seinem Inneren eine Aufnahme 22 für die Ankerstange 12. An der Bodenplatte 18 ist eine Öffnung 24 vorgesehen, durch die die Ankerstange 12 in Längsrichtung L in die Aufnahme 22 eingeschoben werden kann. An der Deckelplatte 16 ist eine Befestigung 26 für eine Setzmaschine, beispielsweise eine Bohrmaschine, angeordnet. Das Setzwerkzeug weist drei gleichmäßig um die Aufnahme 22 angeordnete Klemmelemente 28 auf (siehe insbesondere Figur 2), von denen in Figur 1 aus Gründen der Übersichtlichkeit nur ein Klemmelement 28 dargestellt ist.

Zur Lagerung der Klemmelemente 28 sind Nuten 30 im Setzwerkzeug vorgesehen. Wie in Figur 2 zu sehen ist, sind die Nuten 30 bogenförmig ausgebildet, wobei sich der radiale Abstand zum Mittelpunkt 42 der Aufnahme 22 entgegen einer Drehrichtung D verringert. In Figur 2 sind drei gleichmäßig verteilt angeordnete Nuten 30 gezeigt, wobei für jedes Klemmelement 28 eine Nut 30 vorgesehen ist. Die Nuten 32 der Bodenplatte 18 sind analog dazu ausgebildet, wobei die Nuten 32 der Bodenplatte 18 entgegen der Drehrichtung D versetzt angeordnet sind, sodass das Klemmelement 28 mit einem Anstellwinkel α geneigt ist.

Das Klemmelement 28 weist eine Schraube 31 auf, die an der Deckelplatte 16 und der Bodenplatte 18 jeweils in einer Nut 30, 32 gelagert ist, die jeweils eine Führung für das Klemmelement 28 bilden, und durch eine Mutter 34 an der Bodenplatte 18 fixiert ist. Wie in Figur 1 zu sehen ist, ist die Schraube 31 in einem Anstellwinkel α zur Längsachse des Gehäuses 14 geneigt. An jeder der Nuten 30, 32 ist ein Führungselement 36, 38 vorgesehen. Diese Führungselemente 36, 38 dienen dazu, dass trotz des Anstellwinkels α der Schraube 31 für den Kopf 39 der Schraube 31 und die Mutter 34 eine ebene Auflagefläche vorhanden ist. An der Schraube 31 ist eine Klemmbacke 40 vorgesehen, die durch eine auf der Schraube 31 drehbar gelagerte Walze gebildet ist.

Zur Montage einer Ankerstange 12 wird diese in Längsrichtung L in die Aufnahme 22 eingeschoben, bis der Kopf 44 der Ankerstange 12 an der Deckelplatte 16 anliegt (siehe Figur 1). Die Klemmelemente 28 befinden sich in einer Ausgangsstellung, die der maximal möglichen Abstand vom Mittelpunkt 42 der Aufnahme 22 entspricht. In der hier gezeigten Ausführungsform entspricht dies dem in Drehrichtung vorderen Ende der Nuten 30, 32. Die Klemmelemente können auch bereits lose an der Ankerstange anliegen und aufgrund der Reibung zwischen Ankerstange 12 und Klemmelemente 28 im Gehäuse verschoben werden, wie dies insbesondere bei Ankerstangen mit größerem Durchmesser der Fall ist.

Die Ankerstange 12 wird nun mit dem aufgesteckten Setzwerkzeug 10 in das mit der aushärtbaren Masse teilbefüllte Bohrloch eingeführt. Mittels einer Setzmaschine (Bohrmaschine, Schrauber) wird über die Befestigung 26 das Setzwerkzeug 10 in Drehrichtung D beschleunigt. Dabei wird das Gehäuse 14 in Drehrichtung D gegen die Ankerstange 12 verdreht. Die Klemmelemente 28 sind fliegend in den Nuten 30 bzw. 32 gelagert, sodass sich diese beim Drehen des Setzwerkzeugs 10 in Drehrichtung D aufgrund von Trägheitskräften in den Nuten 30, 32 entgegen der Drehrichtung D von einer Ausgangsstellung nach innen in eine Klemmstellung gegen die Ankerstange bewegen, an dieser verklemmen und aufgrund der Schrägstellung der Klemmelemente an dieser in Setzrichtung der Ankerstange abrollen. Durch geeignete Ausgestaltung der Nuten 30, 32 kann eine Selbstklemmung erzielt werden.

Ist die gewünschte Position der Ankerstange im Bohrloch erreicht, wird die Drehbewegung D gestoppt. Das Setzwerkzeug 10 wird von der Ankerstange 12 gelöst, indem dieses entgegen der Drehrichtung D gegen die Ankerstange 12 verdreht wird, sodass die Klemmelemente 28 in den Nuten 30 bzw. 32 in Drehrichtung D von der Klemmstellung zurück in die Ausgangsstellung bewegt werden, in der diese die Ankerstange 12 nicht mehr fixieren. Das Klemmen der Ankerstange 12 bzw. das Lösen dieser Ankerstange erfolgt also ohne zusätzliches Werkzeug, sodass ein schnelles und einfaches Arbeiten mit einem solchen Setzwerkzeug 10 möglich ist. Das Drehen des Gehäuses kann beispielsweise durch die Setzmaschine (Bohrhammer, Schrauber) erfolgen.

Durch den Anstellwinkel α der Klemmelemente 28 wird die Ankerstange 12 beim Fixieren des Setzwerkzeugs, also einem Drehen in Drehrichtung D, in Richtung zur Deckelplatte 16 gezogen, sodass sich die Ankerstange 12 im Setzwerkzeug 10 formschlüssig verbindet.

An der Bodenplatte 18 ist zusätzlich eine elastische Scheibe 46 vorgesehen, die der Vorfixierung der Ankerstange 12 dient. Die Öffnung 48 der Scheibe 46 ist so gewählt, dass diese kleiner ist als der Durchmesser der kleinsten einzusetzenden Ankerstange. Beim Einschieben der Ankerstange 12 kann diese Öffnung 48 elastisch nachgeben, sodass sie am Umfang der Ankerstange anliegt. Dadurch erfolgen eine Vorfixierung sowie eine mittige Zentrierung der Ankerstange 12 in der Aufnahme 22. Zudem dient die elastische Scheibe 46 als Spritzschutz gegen Verunreinigungen, sodass Staub, Mörtel oder andere Verschmutzungen nicht in die Aufnahme 22 eindringen und die Klemmbacken bzw. die Klemmelemente 28 verschmutzen und somit die Funktion des Setzwerkzeuges beinträchtigen können.

Die Länge des Teils des Setzwerkzeuges 10, das die Ankerstange 12 umschließt ist so gewählt, dass diese maximal 80 % der Länge des Abschnitts der Ankerstange 12 entspricht, der nach dem Setzen aus dem Untergrund ragt. Dadurch ist gewährleistet, dass das Setzwerkzeug 10 beim Einsetzen der Ankerstange nicht am Untergrund anliegen kann, sondern beabstandet von diesem gehalten wird. Dies stellt sicher, dass beim Eindrehen der Ankerstange 10 weder eine Beschädigung des Untergrunds noch des Setzwerkzeugs 10 erfolgt. Zudem ist dieser Abstand erforderlich, da beim Einsetzen der Ankerstange 12 der planmäßige Mörtelüberschuss, der aus dem Bohrloch herausgedrängt wird, abfließen kann und dabei das Setzwerkzeug 10 nicht verschmutz.

Das Material der Klemmbacken 40 ist hier so gewählt, dass eine gute, kraftschlüssige Verbindung zur Ankerstange 12 entsteht. Andererseits muss sichergestellt werden, dass, falls die Ankerstange 12 ein Gewinde aufweist, dieses nicht beim Klemmen der Ankerstange 12 beschädigt wird. Aus diesem Grund werden vorzugsweise gummiartige Materialien oder Kunststoffe verwendet. Die Werkstoffe sollen in jedem Fall weicher sein als das Material der Ankerstange 12, sodass eine Beschädigung der Ankerstange 12 sicher vermieden wird.

Im hier gezeigten Ausführungsbeispiel ist das Setzwerkzeug 10 lediglich für ein Eindrehen der Ankerstange 12 in eine Drehrichtung D geeignet. Ist eine andere Drehrichtung D gewünscht, ist ein anderes Setzwerkzeug mit entgegengesetzten Führungen bzw. Nuten 30, 32 bzw. einem entgegengesetzten Anstellwinkel α erforderlich. Es ist aber auch denkbar, dass die Klemmelemente 28 so ausgebildet sind, dass diese unabhängig von der Drehrichtung D an die Ankerstange 12 geführt werden und diese klemmen.

## Patentansprüche

1. Setzwerkzeug (10) zum Einsetzen einer Ankerstange (12) in ein mit einer aushärtbaren Masse oder mit einer eine aushärtbare Masse enthaltende Patrone gefülltes Bohrloch mit einem Gehäuse (14), das eine Aufnahme (22) für die Ankerstange (12) aufweist, in das die Ankerstange (12) in Längsrichtung (L) eingeschoben und in dieser fixiert werden kann,
wobei zumindest ein Klemmelement (28) vorgesehen ist, das der Aufnahme (22) zugeordnet ist, das in einem Anstellwinkel (α) zur Längsachse der Aufnahme (22) geneigt ist und das in einer Führung in der Aufnahme (22) derart gelagert ist, dass das Klemmelement (28) durch Verdrehen des Gehäuses (14) relativ zur Ankerstange (12) aus einer Aufnahmestellung, in der die Ankerstange (12) in Längsrichtung (L) in die Aufnahme (22) eingeschoben werden kann, in eine Klemmstellung, in der die Ankerstange (12) in Umfangsrichtung und Längsrichtung L in der Aufnahme (22) fixiert ist, bewegt werden kann, **dadurch gekennzeichnet,**
**dass** das Gehäuse (14) im Wesentlichen zylinderförmig ausgebildet ist, mit einer Bodenplatte (18), die eine Öffnung (24) zum Einschieben der Ankerstange (12) aufweist, und einer der Bodenplatte (18) gegenüberliegenden Deckelplatte (16), und
**dass** die Führung der Klemmelemente 28 durch eine Nut (30, 32) in der Bodenplatte (18) und der Deckelplatte (16) des Gehäuses (14) gebildet ist, wobei die Nut (30, 32) eine geradlinige oder bogenförmigen Bahn definiert, auf der das Klemmelement (28) von einer Aufnahmestellung in einer Klemmstellung an die Ankerstange (12) geführt wird, und die Nuten (30, 32) in der Deckelplatte (16) und der Bodenplatte (18) in Umfangsrichtung versetzt angeordnet sind.

2. Setzwerkzeug nach Anspruch 1, **dadurch gekennzeichnet, dass** das Klemmelement (28) einen Bolzen oder eine Schraube (31) aufweist, die sich im Wesentlichen in Längsrichtung (L) durch das Gehäuse (14) erstreckt und insbesondere in einer Bodenplatte (18) und einer Deckelplatte (16) gelagert ist.

3. Setzwerkzeug nach Anspruch 2, **dadurch gekennzeichnet, dass** an dem Bolzen oder der Schraube (31) eine Klemmbacke (40) gelagert ist, mit der das Klemmelement (28) an der Ankerstange (12) angreifen kann.

4. Setzwerkzeug nach Anspruch 3, **dadurch gekennzeichnet, dass** die Klemmbacke (40) eine Walze ist, die drehbar um den Bolzen oder die Schraube (31) gelagert ist.

5. Setzwerkzeug nach Anspruch 4, **dadurch gekennzeichnet, dass** die Klemmbacke aus Gummi oder Kunststoff besteht.

6. Setzwerkzeug nach einem der Ansprüche 2 bis 5, **dadurch gekennzeichnet, dass** der Bolzen oder die Schraube (31) mit Führungselementen (36, 38) in der Führung gelagert ist, die den Anstellwinkel (α) einstellen.

7. Setzwerkzeug nach einem der vorhergehenden Ansprüche, **dadurch gekennzeichnet, dass** die Öffnung (24, 48) der Bodenplatte (18) für eine Vorfixierung der Ankerstange (12) elastisch ausgebildet ist.

8. Setzwerkzeug nach einem der vorhergehenden Ansprüche, **dadurch gekennzeichnet, dass** drei Klemmelemente (28) vorgesehen sind, die insbesondere in Umfangsrichtung gleichmäßig um die Ankerstange (12) verteilt angeordnet sind.

9. Setzwerkzeug nach einem der vorhergehenden Ansprüche, **dadurch gekennzeichnet, dass** am Gehäuse (14) eine Befestigung (26) für eine Setzmaschine vorgesehen ist.

10. Verfahren zur Montage einer Ankerstange (12) mit einem Setzwerkzeug (10) nach einem der vorhergehenden Ansprüche mit folgenden Schritten:
- Einschieben der Ankerstange (12) in Längsrichtung (L) in die Aufnahme (22) des Setzwerkzeugs (10),
- Einführen der Ankerstange (12) in ein Bohrloch,
- Verdrehen des Setzwerkzeugs (10) relativ zur Ankerstange (12) in eine Drehrichtung (D), wobei das zumindest eine Klemmelement (28) gegen die Ankerstange (12) geführt wird, an dieser gegebenenfalls abrollt bis die Deckelplatte (16) am Ankerstangenende formschlüssig anliegt, das Setzwerkzeug mit der Ankerstange 12 verklemmt und diese kraftschlüssig verbunden wird,
- Lösen des Setzwerkzeugs (10) durch Verdrehen des Setzwerkzeugs (10) relativ zur Ankerstange (12) entgegen der Drehrichtung (D).

## Claims

1. Setting tool (10) for inserting an anchor rod (12) into a drill hole filled with a curable composition or with a cartridge containing a curable composition, comprising a housing (14) having a receiver (22) for the anchor rod (12), wherein the anchor rod (12) can be inserted into said receiver in the longitudinal direction (L) and fixed therein,
wherein at least one clamping element (28) is provided and is associated with the receiver (22), said clamping element being inclined at an angle of inclination (α) relative to the longitudinal axis of the receiver (22) and supported in a guide in the receiver (22) in such a manner that, by rotating the housing (14) relative to the anchor rod (12), the clamping element (28) can be moved out of a receiving position in which the anchor rod (12) can be inserted into the receiver (22) in the longitudinal direction (L) into a clamping position in which the anchor rod (12) is fixed in the receiver (22) in the circumferential direction and in the longitudinal direction (L), **characterised in that**
the housing (14) is substantially cylindrical, comprising a bottom plate (18) having an opening (24) for the insertion of the anchor rod (12) and a cover plate (16) situated opposite the bottom plate (18) and
the guide for the clamping elements (28) is formed by a groove (30, 32) in the bottom plate (18) and in the cover plate (16) of the housing (14), wherein the groove (30, 32) defines a linear or curved path along which the clamping element (28) is guided towards the anchor rod (12), moving from a receiving position to a clamping position, and the grooves (30, 32) in the cover plate (16) and in the bottom plate (18) are arranged in such a manner that they are offset in the circumferential direction.

2. Setting tool according to claim 1, **characterised in that** the clamping element (28) has a bolt or a screw (31) extending through the housing (14) substantially in the longitudinal direction (L) and, in particular, supported in a bottom plate (18) and in a cover plate (16).

3. Setting tool according to claim 2, **characterised in that** a clamping jaw (40) by means of which the clamping element (28) can act on the anchor rod (12) is supported on the bolt or screw (31).

4. Setting tool according to claim 3, **characterised in that** the clamping jaw (40) is a roll supported in such a manner that it can rotate about the bolt or screw (31).

5. Setting tool according to claim 4, **characterised in that** the clamping jaw consists of rubber or plastic.

6. Setting tool according to one of claims 2 to 5, **characterised in that** the bolt or screw (31) is supported in the guide with guide elements (36, 38) that adjust the angle of inclination (α).

7. Setting tool according to one of the preceding claims, **characterised in that** the opening (24, 48) in the bottom plate (18) is designed to be resilient for pre-fixing of the anchor rod (12).

8. Setting tool according to one of the preceding claims, **characterised by** three clamping elements (28), in particular arranged in such a manner that they are distributed uniformly around the anchor rod (12) in the circumferential direction.

9. Setting tool according to one of the preceding claims, **characterised in that** a fastening means (26) for a setting machine is provided on the housing (14).

10. Method of mounting an anchor rod (12) with a setting tool (10) according to one of the preceding claims, comprising the following steps:
- inserting the anchor rod (12) into the receiver (22) of the setting tool (10) in the longitudinal direction (L),
- inserting the anchor rod (12) into a drill hole,
- rotating the setting tool (10) relative to the anchor rod (12) in a direction of rotation (D), wherein the at least one clamping element (28) is guided towards the anchor rod (12) and optionally rolls on it until the cover plate (16) bears positively against the end of the anchor rod, such that the setting tool is locked to the anchor rod (12) and the anchor rod is connected in a non-positive manner,
- releasing the setting tool (10) by rotating the setting tool (10) relative to the anchor rod (12) in the opposite direction to the direction of rotation (D).

## Revendications

1. Outil de pose (10) destiné à insérer une tige d'ancrage (12) dans un trou percé rempli d'un composant durcissable ou avec une cartouche contenant un composant durcissable, ayant un boîtier (14) comportant un logement (22) pour la tige d'ancrage (12), logement dans lequel la tige d'ancrage (12) peut être insérée dans une direction longitudinale (L) et être fixée dans celui-ci,
dans lequel est prévu au moins un élément de serrage (28) associé au logement (22), l'élément de serrage étant incliné à un angle d'inclinaison (α) par rapport à l'axe longitudinal du logement (22) et supporté dans un guide dans le logement (22) de telle sorte que l'élément de serrage (28) peut être déplacé en faisant tourner le boîtier (14) par rapport à la tige d'ancrage (12) depuis une position de réception, dans laquelle la tige d'ancrage (12) peut être insérée dans le logement (22) dans la direction longitudinale (L), jusqu'à une position de serrage dans laquelle la tige d'ancrage (12) est fixée dans le logement (22) dans une direction circonférentielle et dans la direction longitudinale (L), **caractérisé en ce que**
le boîtier (14) est formé de manière sensiblement cylindrique, muni d'une plaque de fond (18) comportant une ouverture (24) pour insérer la tige d'ancrage (12) et d'une plaque de recouvrement (16) opposée à la plaque de fond (18), et
le guide des éléments de serrage (28) est formé par une rainure (30, 32) dans la plaque de fond (18) et la plaque de recouvrement (16) du boîtier (14), dans lequel la rainure (30, 32) définit une piste linéaire ou incurvée sur laquelle l'élément de serrage (28) est guidé sur la tige d'ancrage (12) d'une position de réception à une position de serrage, et les rainures (30, 32) sont agencées de manière décalée dans la plaque de recouvrement (16) et la plaque de fond (18) dans la direction circonférentielle.

2. Outil de pose selon la revendication 1, **caractérisé en ce que** l'élément de serrage (28) comporte un boulon ou une vis (31) qui s'étend à travers le boîtier (14) sensiblement dans la direction longitudinale (L) et qui est en particulier supporté dans une plaque de fond (18) et une plaque de recouvrement (16).

3. Outil de pose selon la revendication 2, **caractérisé en ce qu'**une mâchoire de serrage (40) est supportée sur le boulon ou la vis (31), mâchoire de serrage au moyen de laquelle l'élément de serrage (28) peut agir sur la tige d'ancrage (12).

4. Outil de pose selon la revendication 3, **caractérisé en ce que** la mâchoire de serrage (40) est un cylindre qui est supporté de manière à pouvoir tourner autour du boulon ou de la vis (31).

5. Outil de pose selon la revendication 4, **caractérisé en ce que** la mâchoire de serrage est en caoutchouc ou en matière plastique.

6. Outil de pose selon l'une des revendications 2 à 5, **caractérisé en ce que** le boulon ou la vis (31) est supporté dans le guide avec des éléments de guindage (36, 38) qui règlent l'angle d'inclinaison (α).

7. Outil de pose selon l'une des revendications précédentes, **caractérisé en ce que** l'ouverture (24, 48) de la plaque de fond (18) est formée élastiquement pour une pré-fixation de la tige d'ancrage (12).

8. Outil de pose selon l'une des revendications précédentes, **caractérisé en ce que** sont prévus trois éléments de serrage (28), en particulier agencés de manière uniformément répartie autour de la tige d'ancrage (12) dans une direction circonférentielle.

9. Outil de pose selon l'une des revendications précédentes, **caractérisé en ce qu'**une fixation (26) pour une machine de pose est prévue sur le boîtier (14).

10. Procédé pour monter une tige d'ancrage (12) avec un outil de pose (10) selon l'une des revendications précédentes, comportant les étapes suivantes consistant à :
- insérer la tige d'ancrage (12) dans une direction longitudinale (L) dans le logement (22) de l'outil de pose (10),
- introduire la tige d'ancrage (12) dans un trou percé,
- faire tourner l'outil de pose (10) par rapport à la tige d'ancrage (12) dans un sens de rotation (D), le au moins un élément de serrage (28) étant guidé contre la tige d'ancrage (12) éventuellement roulant contre celle-ci, jusqu'à ce que la plaque de recouvrement (16) soit en contact par complémentarité de formes avec l'extrémité de la tige d'ancrage, ce qui serre l'outil de pose avec la tige d'ancrage (12) et assemble à force à ceux-ci,
- libérer l'outil de pose (10) en faisant tourner l'outil de pose (10) par rapport à la tige d'ancrage (12) dans le sens inverse au sens de rotation (D).
